# EUROPÄISCHE PATENTSCHRIFT

(11) **EP 0 967 117 B1**
(45) Veröffentlichungstag und Bekanntmachung des Hinweises auf die Patenterteilung: **16.04.2003**
(21) Anmeldenummer: 99111002.4
(22) Anmeldetag: 10.06.1999
(51) Int. Cl.: B60R 1/12

(54) **Informationseinrichtung für ein Kraftfahrzeug**
Information device for a vehicle
Dispositif d'information pour véhicule

(30) Priorität: 26.06.1998 DE 19835275; 23.06.1998 DE 19827762
(43) Veröffentlichungstag der Anmeldung: 29.12.1999
(73) Patentinhaber: Volkswagen Aktiengesellschaft, 38436 Wolfsburg (DE)
(72) Erfinder: Niefenecker, Jens, 38550 Isenbüttel (DE); Schulze, Heinz-Joachim, Dipl.-Ing., 31141 Hildesheim (DE)

(56) Entgegenhaltungen:
- EP-A- 0 937 601
- DE-A- 2 044 944
- DE-U- 29 703 084
- US-A- 5 455 716

## Beschreibung

Die Erfindung betrifft eine Informationseinrichtung für ein Kraftfahrzeug in Kombination mit einem Innenrückspiegel, wobei der Innenrückspiegel ein einen Spiegel aufnehmendes Gehäuse aufweist, das an einem Tragarm gehalten ist und die Informationseinrichtung aus einem Modulgehäuse und mindestens einem in dem Modulgehäuse angeordnetes Anzeigeelement besteht.

Aus der deutschen Offenlegungsschrift DE 37 35 847 A1 ist ein Kraftfahrzeug mit einer Rangiereinrichtung bekannt, die durch ein optisches Signal den Fahrer warnt, wenn er sich einem Hindernis unerwünscht nähert. Zur Anzeige des optischen Signals weist der Innenrückspiegel im Spiegelgehäuse unmittelbar unterhalb der Spiegelfläche eine Anzeigefläche auf.

In dem deutschen Gebrauchsmuster G 90 10 589 wird ein Innenrückspiegel vorgeschlagen, der an seiner Rückseite eine das Fahrverhalten des Fahrzeuges signalisierende Anzeigeeinrichtung aufweist, welche Fußgänger und entgegenkommende Fahrzeuge beispielsweise über das Fahrverhalten des die Anzeigeeinrichtung aufweisenden Fahrzeuges informiert.

Des weiteren beschreibt die deutsche Offenlegungsschrift DE 37 20 848 A1 eine Anzeigeeinrichtung in Kraftfahrzeugen, die mit dem Rückspiegel des Fahrzeuges eine Baueinheit bildet. Um eine möglichst geringe Beeinträchtigung für die Sicht des Fahrers nach hinten durch den Rückspiegel zu erzielen, ist ein LCD hinter dem Flächenbereich der Spiegelfläche des Rückspiegels angeordnet, wobei dieser Bereich teilweise lichtdurchlässig ist. Die von der Rückseite her zu beleuchtende LCD ist zur Ausgabe von Informationen elektronisch so anzusteuern, daß das Licht an dem angesteuerten bzw. nicht angesteuerten Bereichen durch die LCD und durch die teilweise lichtdurchlässige Spiegelfläche für den Fahrer sichtbar austritt.

Außerdem wird in der deutschen Offenlegungsschrift DE 43 22 937 A1 eine Informationseinrichtung für Kraftfahrzeuge vorgeschlagen, die eine an ein Bordnetz des Kraftfahrzeuges anschließbare elektronische Schaltung sowie einen oder mehrere Sensoren, eine Anzeigeeinrichtung und gegebenenfalls Bedienelemente umfaßt. Um die Anzeigevorrichtung für den Fahrer übersichtlich zu gestalten, ist vorgesehen, daß der Sensor und die Schaltung im Gehäuse eines Kraftfahrzeug-Innenspiegels untergebracht sind, wobei die Schaltung mit einem durch einen hohlen Tragarm des Innenspiegels geführten und an das Bordnetz anschließbaren Kabel verbunden ist und in das Spiegelglas des Innenspiegels die Anzeigevorrichtung integriert ist. An das Spiegelgehäuse ist längs seines unteren Randes eine Leiste angeformt, in welcher eine weitere Anzeigevorrichtung und eventuell die Bedienelemente angeordnet sind.

Die erwähnten Anzeigeanordnungen weisen den Nachteil auf, daß sie in die Spiegelbaugruppe integriert und damit sehr kostspielig in ihrer Herstellung sind. Des weiteren können durch das zusätzliche Gewicht der Anzeigeanordnungen Vibrationen bzw. Schwingungen entstehen, wodurch es für den Betrachter schwer ist, das Bild klar zu sehen.

Zur Beseitigung dieses Mangels ist in der europäischen Patentschrift EP 0 667 254 B1 ein Fahrzeug-Anzeigegerät beschrieben, bei dem die Anzeige aus einem Zusatzmodul besteht, daß unterhalb und hinter dem Rückspiegelgehäuse angeordnet ist. Zur Befestigung des Anzeigemoduls ist es an einer das Rückspiegelgehäuse im Fahrzeug tragenden Struktur, beispielsweise an einer Halterung, die mit der Windschutzscheibe gekoppelt ist, angebracht. Problematisch ist bei der in dem europäischen Patent vorgeschlagenen Lösung, daß die Anzeige zwar vom Fahrer und Beifahrer gesehen werden kann, die Insassen auf den Rücksitzen die Anzeige jedoch nur schwer einsehen können. Des weiteren wird das Anzeigemodul an der Spiegelhalterung angebracht, wodurch zusätzlicher Bauraum benötigt wird, der die Sicht durch die Windschutzscheibe einschränkt. Wenn zusätzlich in dem Spiegelgehäuse eine Leuchte vorgesehen ist, wird die Anzeigeeinrichtung von dieser angestrahlt und damit die Lesbarkeit der Anzeige beeinträchtigt.
Eine gättungsgemäße Einrichtung ist auch aus DE-29 703 084 U bekannt. Die Aufgabe der Erfindung ist es, eine Informationseinrichtung in kombination mit einem Innenrückspiegel zu schaffen, die auf einfache Weise im Kraftfahrzeug montierbar ist, einen weitestgehend vibrationsarmen Aufbau im Fahrbetrieb bietet, einen möglichst geringen zusätzlichen Platzbedarf benötigt und von den Insassen des Kraftfahrzeuges gut ablesbar ist.

Die Lösung der Aufgabe ergibt sich aus den Merkmalen des Patentanspruchs 1 Vorteilhafte Aus- und Weiterbildungen sind in den Unteransprüchen dargestellt.

Gemäß der erfindungsgemäßen Lösung ist der Tragarm über eine Öffnung in das Modulgehäuse der Informationseinrichtung geführt wobei das Modulgehäuse der Informationseinrichtung zumindest die Befestigungseinrichtung aufnimmt und dadurch verdeckt.

In einer Fortbildung der Erfindung ist das Modulgehäuse am Kraftfahrzeugteil befestigt.

Besonders vorteilhaft ist eine Ausbildung anzusehen, wenn der Innenrückspiegel über seine Befestigungseinrichtung und das Modulgehäuse am Dach bzw. am Dachhimmel des Kraftfahrzeuges angebracht ist. Damit befindet sich das Anzeigeelement oberhalb des Innenrückspiegels und ist somit auch gut von den Insassen auf den Rücksitzen des Fahrzeuges einsehbar. Des weiteren befindet sich das Gehäuse des Innenrückspiegels dann zwischen einer eventuell vorgesehenen Innenraumleuchte und dem Anzeigeelement, so daß die Ablesbarkeit des Anzeigeelementes durch das Licht der Leuchte nicht beeinträchtigt wird.

Weiterhin ist die Einsehbarkeit der Anzeige gemäß einer weiteren Ausgestaltung verbessert, bei der vorgesehen ist, das mindestens ein Anzeigeelement oberhalb des Gehäuses des Innenspiegels in Blickrichtung der Fahrzeuginsassen vor dem Gehäuse anzuordnen.

Gemäß einer vorteilhaften Ausbildung der Erfindung besteht das Modulgehäuse der Informationseinrichtung aus einem zum Kraftfahrzeugteil offenen Schalengehäuse. Diese Ausführung verbessert die Montage- bzw. Reparaturfreundlichkeit sowohl der Informationseinrichtung als auch des Innenrückspiegels, insbesondere dann, wenn beispielsweise elektrische Schaltungen und Leitungen des Anzeigeelementes und Anschlußstecker von Spiegelverstelleinrichtungen, automatischen Abblendeinrichtungen oder einer oder mehreren im Spiegelgehäuse integrierten Leuchten in dem Modulgehäuse untergebracht sind.

Eine weitere Ausbildung sieht vor, daß das Modulgehäuse in das Kraftfahrzeugteil einclipsbar ausgebildet ist, wodurch ebenfalls die Montage bzw. die Demontage der gesamten Einheit, bestehend aus Informationseinrichtung und Innenrückspiegel, im Fahrzeug vereinfacht bzw. erleichtert wird.

Des weiteren kann vorgesehen sein, daß das Modulgehäuse neben einem oder mehreren Anzeigeelementen auch Bedienelemente aufnimmt. Diese können einmal zur Einstellung der Anzeigen dienen, aber auch vollständig unabhängig von der Anzeige sein.

Nachfolgend wird die Erfindung anhand eines Ausführungsbeispiels näher beschrieben. Die zugehörigen Zeichnungen zeigen:
- Fig. 1: eine Draufsicht der erfindungsgemäßen Anordnung und
- Fig. 2: einen Schnitt durch die erfindungsgemäße Anordnung an der Linie A-A.

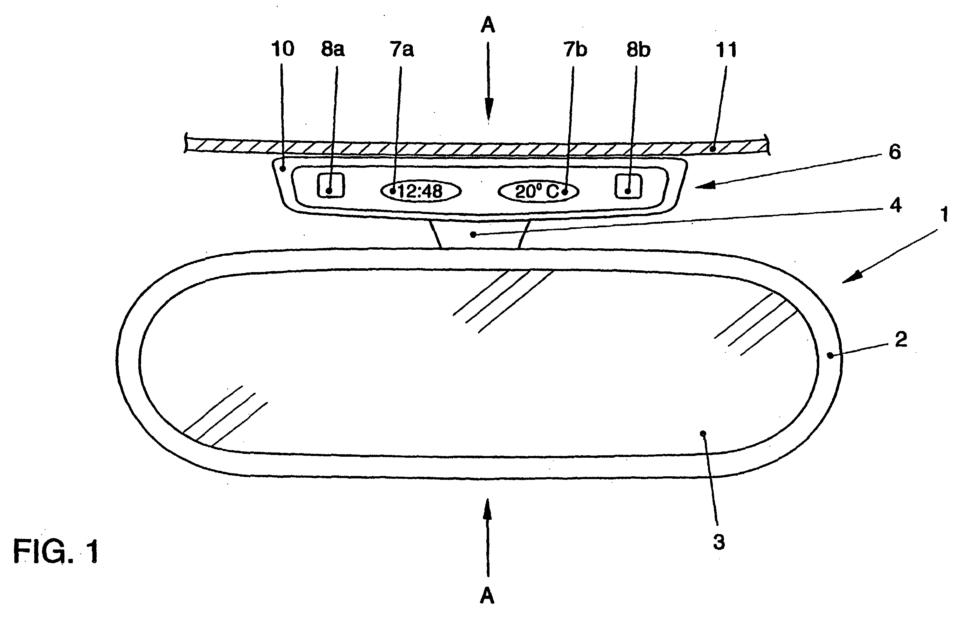

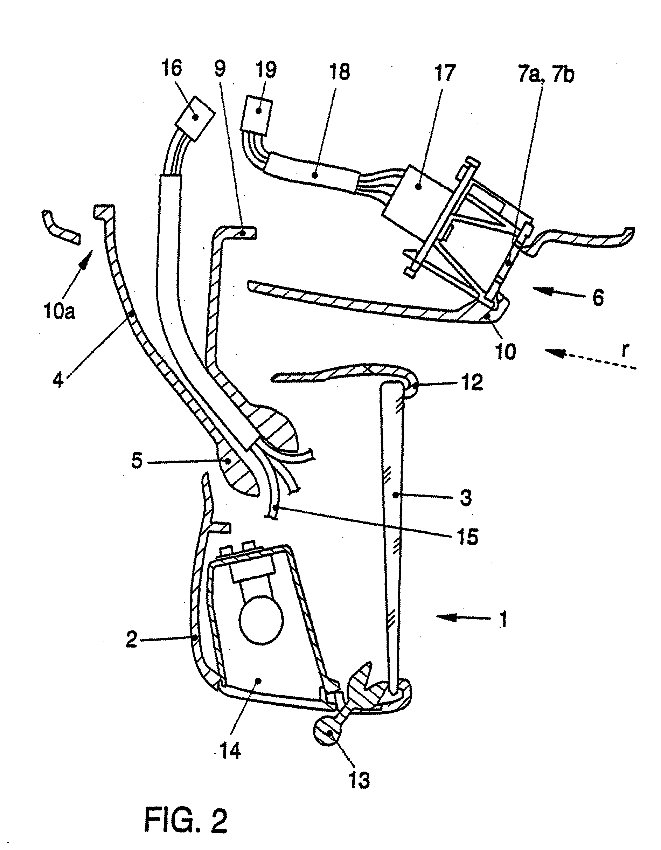

Der in Figur 1 dargestellte Innenrückspiegel 1 weist ein Gehäuse 2 mit einem Spiegel 3 auf, das an einem hohl ausgeführten Tragarm 4, beispielsweise über ein Kugelgelenk 5 (Figur 2), beweglich gehalten ist. Oberhalb des Gehäuses 2 ist eine Informationseinrichtung 6 angeordnet, deren Modulgehäuse 10 zwei Anzeigelemente 7a, 7b sowie zwei Bedienelemente 8a, 8b, die beispielsweise als Drucktasten ausgebildet sind, aufweist. Im Ausführungsbeispiel sind auf den Anzeigeelementen die Uhrzeit und die Umgebungstemperatur außerhalb des Fahrzeuges dargestellt. Des weiteren ist aber auch denkbar, die Innentemperatur oder Parameter von Fahrerassistenzsystemen sowie die Fahrtrichtung bzw. die Himmelsrichtung anzuzeigen.

Sowohl der Tragarm 4 des Innenrückspiegels über die Befestigungseinrichtung 9 (Figur 2) als auch das Modulgehäuse 10 sind am Dachhimmel 11 des Kraftfahrzeuges lösbar befestigt.

Figur 2 zeigt einen Schnitt durch die erfindungsgemäße Anordnung, bestehend aus dem Innenrückspiegel 1 und der Informationseinrichtung 6. Wie zu erkennen ist, ist das Modulgehäuse 10 der Informationseinrichtung schalenförmig und zum Dachhimmel des Kraftfahrzeuges offen ausgebildet. Es nimmt die Anzeigeelemente 7a, 7b derart auf, daß sie aus der Blickrichtung r der Insassen gesehen, sich vor dem Rückspiegel befinden und so angeordnet sind, daß die Anzeigeelemente von den Fahrzeuginsassen jenseits des Randes 12 des Gehäuses 2 betrachtet werden können. Aufgrund dieser Anordnung ist es auch für Insassen auf den Rücksitzen des Fahrzeuges möglich, die Anzeigen auf den Anzeigeelementen gut zu erkennen.

Das Gehäuse 2 des Innenrückspiegels 1 ist über das Kugelgelenk 5 an dem Tragarm 4 in verschiedene Richtungen verstellbar gehalten. Der Tragarm 4 wiederum wird über eine Öffnung 10a im Modulgehäuse 10 der Informationseinrichtung 6 geführt und ist mittels der Befestigungseinrichtung 9 am Dachhimmel befestigt. Außer dem Spiegel 3, der über einen Kipphebel 13 in eine Abblendposition bringbar ist, ist in dem Gehäuse 2 zusätzlich eine Leseleuchte 14 integriert, deren elektrische Leitungen 15 durch den Tragarm 4 nach außen geführt sind und in einem Stecker 16 enden.

Nach der Montage der erfindungsgemäßen Anordnung im Fahrzeug werden die Befestigungseinrichtung 9 als auch der Stecker 16 sowie die elektrische Schaltung 17 der Anzeigeelemente 7a, 7b und der Bedienelemente 8a, 8b als auch deren elektrische Leitungen 18 mit dem Stecker 19 vom Modulgehäuse 10 vollständig verdeckt und sind vom Fahrgastraum aus nicht sichtbar. Das Modulgehäuse 10 wird dabei über federnde Elemente in den Dachhimmel eingeclipst.

### BEZUGSZEICHENLISTE

- 1: Innenrückspiegel
- 2: Gehäuse
- 3: Spiegel
- 4: Tragarm
- 5: Kugelgelenk
- 6: Informationseinrichtung
- 7a, 7b: Anzeigeelemente
- 8a, 8b: Bedienelemente
- 9: Befestigungseinrichtung
- 10: Modulgehäuse
- 10a: Öffnung
- 11: Dachhimmel
- 12: Rand
- 13: Kipphebel
- 14: Leseleuchte, Leuchte
- 15: elektrische Leitungen
- 16: Stecker
- 17: elektrische Schaltung
- 18: elektrische Leitungen
- 19: Stecker
- r: Blickrichtung

## Patentansprüche

1. Informationseinrichtung für ein Kraftfahrzeug in kombination mit einem Innenrückspiegel (1), wobei der Innenrückspiegel ein einen Spiegel (3) aufnehmendes Gehäuse (2) aufweist, das an einem Tragarm (4) gehalten ist der Tragarm (4) über eine Befestigungseinrichtung (9) an einem Kraftfahrzeugteil (11) befestigbar ist, und die Informationseinrichtung (6) aus einem Modulgehäuse (10) und mindestens einem in dem Modulgehäuse (10) angeordneten Anzeigeelement (7a, 7b) besteht,
**dadurch gekennzeichnet,**
**dass** der Tragarm (4) über eine Öffnung (10a) in das Modulgehäuse (10) der Informationseinrichtung (6) geführt ist und das Modulgehäuse (10) der Informationseinrichtung (6) Zumindest die Befestigungseinrichtung (9) aufnimmt und dadurch verdeckt.

2. Informationseinrichtung nach Anspruch 1,
**dadurch gekennzeichnet, dass**
das Modulgehäuse (10) am Kraftfahrzeugteil (11) befestig bar ist.

3. Informationseinrichtung nach einem der vorangehenden Ansprüche,
**dadurch gekennzeichnet,**
**dass** der Innenrückspiegel (1) elektrisch verstellbar ausgebildet ist.

4. Informationseinrichtung nach einem der vorangehenden Ansprüche,
**dadurch gekennzeichnet,**
**dass** das mindestens eine Anzeigeelement (7a, 7b) sich in eingebauten Zustand in Blickrichtung (r) der Fahrzeuginsassen vor dem Gehäuse (2) befindet.

5. Informationseinrichtung nach einem der vorangehenden Ansprüche,
**dadurch gekennzeichnet,**
**dass** das Kraftfahrzeugteil (11) das Dach, die Windschutzscheibe oder der Dachhimmel des Kraftfahrzeuges ist.

6. Informationseinrichtung nach einem der vorangehenden Ansprüche,
**dadurch gekennzeichnet,**
**dass** das Modulgehäuse (10) aus einem zum Kraftfahrzeugteil offenen Schalengehäuse besteht.

7. Informationseinrichtung nach einem der vorangehenden Ansprüche,
**dadurch gekennzeichnet,**
**dass** das Modulgehäuse (10) in das Kraftfahrzeugteil (11) einclipsbar ausgebildet ist.

8. Informationseinrichtung nach einem der vorangehenden Ansprüche,
**dadurch gekennzeichnet, dass**
das Modulgehäuse (10) mindestens ein Bedienelement (8a, 8b) aufweist.

9. Informationseinrichtung nach einem der vorangehenden Ansprüche,
**dadurch gekennzeichnet,**
**dass** der Innenrückspiegel (1) mindestens eine Leuchte (14) aufweist, deren elektrische Verbindungsleitungen (15) durch den Tragarm (4) geführt sind.

10. Informationseinrichtung nach einem der vorangehenden Ansprüche,
**dadurch gekennzeichnet, dass**
auf dem mindestens einen Anzeigeelement (7a, 7b) die Uhrzeit und/oder die Fahrzeugaußentemperatur anzeigbar sind.

## Claims

1. Information device for a motor vehicle in combination with an interior rearview mirror (1), the interior rearview mirror having a housing (2) which holds a mirror (3) and which is secured to a bearing arm (4), it being possible to attach the bearing arm (4) to a part (11) of a motor vehicle by means of an attachment device (9), and the information device (6) being composed of a module housing (10) and at least one display element (7a, 7b) which is arranged in the module housing (10), **characterized in that** the bearing arm (4) extends into the module housing (10) of the information device (6) via an opening (10a) and the module housing (10) of the information device (6) accommodates at least the attachment device (9) and thus covers it.

2. Information device according to Claim 1, **characterized in that** the module housing (10) can be attached to the part (11) of the motor vehicle.

3. Information device according to one of the preceding claims, **characterized in that** the interior rearview mirror (1) is designed to be electrically adjustable.

4. Information device according to one of the preceding claims, **characterized in that**, in the installed state, the at least one display element (7a, 7b) is located in front of the housing (10), in the viewing direction (r) of the vehicle occupants.

5. Information device according to one of the preceding claims, **characterized in that** the part (11) of the vehicle is the roof, the windscreen or the interior roof lining of the motor vehicle.

6. Information device according to one of the preceding claims, **characterized in that** the module housing (10) is composed of a shell housing which is open with respect to the part of the motor vehicle.

7. Information device according to one of the preceding claims, **characterized in that** the module housing (10) is designed to be capable of being clipped into the part (11) of the motor vehicle.

8. Information device according to one of the preceding claims, **characterized in that** the module housing (10) has at least one operator control element (8a, 8b).

9. Information device according to one of the preceding claims, **characterized in that** the interior rearview mirror (1) has at least one light (14) whose electric connecting lines (15) extend through the bearing arm (4).

10. Information device according to one of the preceding claims, **characterized in that** the time and/or the temperature outside the vehicle can be displayed on the at least one display element (7a, 7b).

## Revendications

1. Dispositif d'information pour véhicule combiné avec un rétroviseur intérieur (1), le rétroviseur intérieur présentant ici un boîtier (2) dans lequel vient se loger un miroir (3), lequel est maintenu à un bras porteur (4), le bras porteur (4) pouvant être fixé à une partie du véhicule (11) à l'aide d'un dispositif de fixation (9), et le dispositif d'information (6) étant composé d'un boîtier modulaire (10) et d'au moins un élément indicateur (7a, 7b) disposé dans le boîtier modulaire (10), **caractérisé en ce que** le bras porteur (4) pénètre dans le boîtier modulaire (10) du dispositif d'information (6) par le biais d'un orifice (10a) et le boîtier modulaire (10) du dispositif d'information (6) renferme au moins le dispositif de fixation (9) et le recouvre ainsi.

2. Dispositif d'information selon la revendication 1, **caractérisé en ce que** le boîtier modulaire (10) peut être fixé à une partie du véhicule (11).

3. Dispositif d'information selon l'une des revendications précédentes, **caractérisé en ce que** le rétroviseur intérieur (1) est configuré de manière à pouvoir être réglé électriquement.

4. Dispositif d'information selon l'une des revendications précédentes, **caractérisé en ce que** l'au moins un élément indicateur (7a, 7b), en position montée, se trouve devant le boîtier (2) dans le sens d'observation (r) des occupants du véhicule.

5. Dispositif d'information selon l'une des revendications précédentes, **caractérisé en ce que** la partie du véhicule (11) est le toit, le pare-brise ou le toit ouvrant du véhicule.

6. Dispositif d'information selon l'une des revendications précédentes, **caractérisé en ce que** le boîtier modulaire (10) se compose d'un boîtier en coque ouvert en direction de la partie du véhicule.

7. Dispositif d'information selon l'une des revendications précédentes, **caractérisé en ce que** le boîtier modulaire (10) est configuré de manière à pouvoir s'enclipser dans la partie du véhicule (11).

8. Dispositif d'information selon l'une des revendications précédentes, **caractérisé en ce que** le boîtier modulaire (10) présente au moins un élément de commande (8a, 8b).

9. Dispositif d'information selon l'une des revendications précédentes, **caractérisé en ce que** le rétroviseur intérieur (1) présente au moins un voyant (14) dont les fils électriques de raccordement (15) passent à travers le bras porteur (4).

10. Dispositif d'information selon l'une des revendications précédentes, **caractérisé en ce que** l'heure et/ou la température à l'extérieur du véhicule peuvent être affichées sur l'au moins un élément indicateur (7a, 7b).
